# DEMANDE DE BREVET EUROPEEN

(11) **EP 0 538 140 A1**
(43) Date de publication de la demande: **21.04.1993**
(21) Numéro de dépôt: 92402837.6
(22) Date de dépôt: 16.10.1992
(51) Int. Cl.: B01D 53/04, C01B 3/56

(54) **Procédé et installation d'épuration d'un gaz par adsorption**

(30) Priorité: 17.10.1991 FR 9112805
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Gauthier, Pierre, F-94260 Fresnes (FR); Monereau, Christian, F-75011 Paris (FR)
(74) Mandataire: Polus, Camille

(57) **Abrégé**

Dans ce cycle PSA, une partie du gaz résiduaire soutiré à contre-courant des adsorbeurs (1 à 3) en cours de régénération est recyclé et mélangé à l'hydrogène impur entrant.

Application à l'épuration de mélanges riches en hydrogène, en hélium ou en néon.

## Description

La présente invention est relative à l'épuration par adsorption à pression variable (Pressure Swing Adsorption ou PSA) d'un gaz contenant des impuretés préférentiellement adsorbables, notamment d'hydrogène, et plus particulièrement à un procédé du type mettant en oeuvre plusieurs adsorbeurs avec, pour chaque adsorbeur, un cycle comprenant les phases opératoires suivantes, lesquelles sont décalées d'un adsorbeur à l'autre d'un nième de la durée du cycle, ou n désigne le nombre d'adsorbeurs : production sensiblement isobare à une pression haute du cycle, cette phase de production comportant l'admission du gaz impur à traiter dans l'adsorbeur par une première extrémité, dite extrémité d'entrée, de l'adsorbeur, avec circulation de ce gaz dans l'adsorbeur et soutirage simultané à l'autre extrémité de l'adsorbeur de gaz épuré, le sens de circulation dans l'adsorbeur au cours de cette phase de production étant appelé co-courant et le sens inverse de circulation étant appelé contre-courant; régénération de l'adsorbeur comprenant une décompression de l'adsorbeur jusqu'à une pression basse du cycle, cette décompression comprenant au moins une étape dans laquelle un gaz résiduaire est soutiré à contre-courant de l'adsorbeur; et remontée en pression jusqu'à la pression haute du cycle.

L'invention a pour but de permettre d'augmenter le rendement en gaz épuré d'un tel procédé, notamment lorsque le gaz impur de départ est déjà très riche, c'est-à-dire, dans le cas de l'hydrogène, contient typiquement au moins 90%, et généralement au moins 98 à 99%, d'hydrogène.

A cet effet, l'invention a pour objet un procédé du type précité, caractérisé en ce qu'une partie du gaz résiduaire est mélangée au gaz impur à traiter, le reste de ce gaz résiduaire constituant une purge.

Suivant d'autres caractéristiques :
- la phase de production comprend une étape de compression du gaz impur à la pression haute du cycle, et en ce que ladite partie du gaz résiduaire est mélangée au gaz impur avant la compression de celui-ci;
- ladite partie du gaz résiduaire est comprimée avant d'être mélangée au gaz impur sous la pression haute du cycle;
- la régénération de l'adsorbeur comprend les étapes suivantes:
   (a) une première dépressurisation à co-courant par équilibrage de pressions avec un autre adsorbeur en début de phase de remontée en pression;
   (b) une seconde dépressurisation à co-courant , le gaz issu de l'adsorbeur étant envoyé à une capacité auxiliaire;
   (c) une dépressurisation à contre-courant jusqu'à une pression basse du cycle ; et
   (d) une élution à contre-courant au moyen de gaz prélevé dans la capacité auxiliaire, ladite partie du gaz résiduaire provenant de l'une au moins des étapes (c) et (d);
- la remontée en pression s'effectue à contre-courant, d'abord par équilibrage de pressions avec un autre adsorbeur en phase (a) puis par introduction à contre-courant de gaz épuré dans l'adsorbeur;
- la purge représente quelques % à quelques dizaines de % du gaz résiduaire;
- on fait varier le débit de purge au cours du cycle, notamment en fonction de la concentration en impuretés du gaz résiduaire.

L'invention a également pour objet une installation destinée à la mise en oeuvre d'un tel procédé. Cette installation, du type comprenant plusieurs adsorbeurs, un ensemble de conduites et de vannes adapté pour mettre en oeuvre, pour chaque adsorbeur, un cycle comprenant les phases opératoires suivantes, lesquelles sont décalées d'un adsorbeur à l'autre d'un nième de la durée du cycle, ou n désigne le nombre d'adsorbeurs : production sensiblement isobare à une pression haute du cycle, cette phase de production comportant l'admission du gaz impur à traiter dans l'adsorbeur par une première extrémité, dite extrémité d'entrée, de l'adsorbeur, avec circulation de ce gaz dans l'adsorbeur et soutirage simultané à l'autre extrémité de l'adsorbeur de gaz épuré, le sens de circulation dans l'adsorbeur au cours de cette phase de production étant appelé co-courant et le sens inverse de circulation étant appelé contre-courant ; régénération de l'adsorbeur comprenant une décompression de l'adsorbeur jusqu'à une pression basse du cycle, cette décompression comprenant au moins une étape dans laquelle un gaz résiduaire est soutiré à contre-courant de l'adsorbeur; et remontée en pression jusqu'à la pression haute du cycle, est caractérisée en ce qu'elle comprend une conduite de purge reliée à l'extrémité d'entrée des adsorbeurs et sur laquelle est piquée une conduite de recyclage reliée à la conduite d'amenée de gaz impur à traiter.

Des exemples de mise en oeuvre de l'invention vont maintenant être décrits en regard des dessins annexés, sur lesquels :
- la Figure 1 représente schématiquement une installation d'épuration d'hydrogène conforme à l'invention;
- la Figure 2 est un diagramme illustrant le cycle de fonctionnement de cette installation; et
- les Figures 3 et 4 sont des vues schématiques partielles de deux variantes de l'installation.

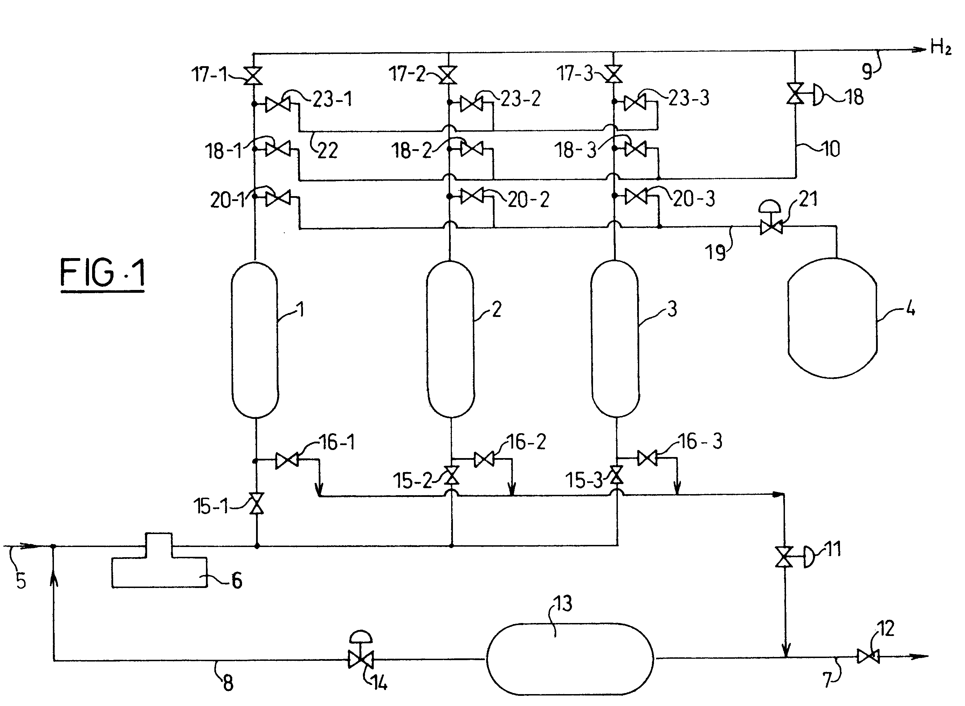

L'installation représentée à la Figure 1 est destinée à produire de l'hydrogène pratiquement pur à partir d'un mélange d'entrée ou "feed" constitué par de l'hydrogène impur déjà riche en hydrogène, c'est-à-dire contenant typiquement au moins 90% environ, et généralement 98 à 99% au moins, d'hydrogène. Elle comprend trois adsorbeurs 1 à 3, une capacité auxiliaire 4, une ligne d'admission 5 équipée d'un compresseur 6, une ligne de purge 7, une ligne de recyclage 8 piquée sur cette ligne 7 et reliée à la ligne d'admission 5 en amont du compresseur, une ligne 9 de production d'hydrogène épuré, et une ligne 10 de prélèvement d'hydrogène épuré.

La ligne de purge 7 comporte, respectivement en amont et en aval du piquage de la ligne 8, un organe 11 de réglage de débit et une vanne de purge 12. La ligne 8 est équipée, à partir de la ligne 7, d'une capacité tampon 13, puis d'un organe 14 de réglage de débit.

La ligne 5 est reliée à l'entrée de chaque adsorbeur par l'intermédiaire d'une vanne respective 15-1, 15-2, 15-3. De même, la ligne 7 est reliée à l'entrée de chaque adsorbeur par l'intermédiaire d'une vanne respective 16-1, 16-2, 16-3.

La ligne 9 est reliée à la sortie de chaque adsorbeur par l'intermédiaire d'une vanne respective 17-1, 17-2, 17-3. De même, la ligne 10, équipée d'un organe de réglage de débit 18, est reliée à la sortie de chaque adsorbeur par l'intermédiaire d'une vanne respective 18-1, 18-2, 18-3.

La capacité 4 peut être reliée à la sortie de chaque adsorbeur par une conduite 19 équipée de trois vannes 20-1, 20-2 et 20-3 respectivement et d'un organe de réglage de débit 21 situé près de l'entrée de la capacité.

Par ailleurs, une ligne d'équilibrage 22 équipée de vannes respectives 23-1, 23-2 et 23-3 permet de relier deux à deux les sorties des trois adsorbeurs.

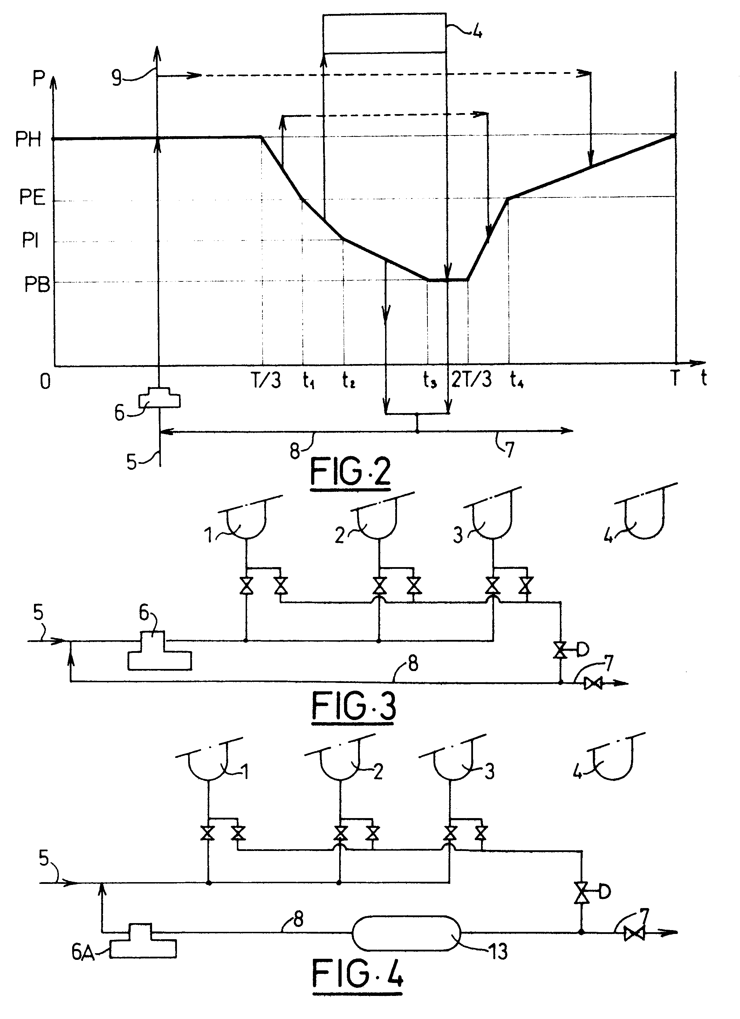

Au moyen de cette installation, qui comporte des moyens de commande et de régulation connus et non représentés, on réalise pour chaque adsorbeur un cycle que l'on a illustré à la Figure 2 en référence à l'adsorbeur 1. Si T désigne la durée du cycle, le fonctionnement de l'adsorbeur 2 s'en déduit par décalage dans le temps de T/3 et celui de l'adsorbeur 3 par décalage dans le temps de 2T/3.

Sur la Figure 2, où les temps t sont portés en abscisses et les pressions absolues P en ordonnées, les traits orientés par des flèches indiquent les mouvements et destinations des courants gazeux; lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le courant est dit à co-courant, dans l'adsorbeur; si la flèche dirigée vers le haut est située au-dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production isobare; lorsqu'une flèche est dans le sens des ordonnées décroissantes (vers le bas du diagramme), le courant est dit à contre-courant, dans l'adsorbeur. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production isobare. D'autre part, on a indiqué en traits pleins les courants gazeux qui concernent exclusivement l'adsorbeur 1 et en traits pointillés les courants gazeux en provenance ou en direction d'autres adsorbeurs.

Ainsi, pour l'adsorbeur 1, le cycle comporte les phases suivantes :
- De t = 0 jusqu'à T/3, l'hydrogène impur à traiter arrivant sur la ligne 5 et comprimé par le compresseur 6, est introduit sous la haute pression PH du cycle à l'entrée de l'adsorbeur, et une production isobare d'hydrogène pur est soutirée sous la même pression de la sortie de l'adsorbeur, et évacuée via la ligne 9.
- De T/3 à t1 < 2T/3, la sortie de l'adsorbeur est reliée à celle d'un autre adsorbeur en début de phase de remontée en pression. Cette étape se poursuit jusqu'à équilibrage des pressions des deux adsorbeurs à une pression d'équilibre PE. En variante, on peut se contenter d'un quasi-équilibrage.
- De t1 à t2 < 2T/3, du gaz, soutiré de la sortie de l'adsorbeur, est envoyé dans la capacité auxiliaire 4, ce qui poursuit la dépressurisation de l'adsorbeur jusqu'à une pression intermédiaire PI.
- De t2 à t3 < 2T/3, l'adsorbeur est décomprimé à contre-courant, en fournissant du gaz résiduaire dans la ligne 7. Cette étape se poursuit jusqu'à la pression basse du cycle PB.
- De t3 à 2T/3, l'adsorbeur est purgé à contre-courant par élution au moyen de gaz prélevé dans la capacité auxiliaire 4, ce qui produit de nouveau du gaz résiduaire envoyé dans la ligne de purge 7.
   Au cours des deux dernières étapes décrites ci-dessus, c'est-à-dire produisant un gaz résiduaire à contre-courant, une partie du gaz résiduaire est recyclée via la ligne 8 et renvoyée à l'aspiration du compresseur 6. Le reste du gaz résiduaire est évacué de l'installation, en temps que purge, via la ligne 7 et la vanne 12.
- De 2T/3 à t4 < T, la pression de l'adsorbeur remonte de PB à PE par équilibrage de pressions avec un autre adsorbeur en cours de première dépressurisation à co-courant, décrite ci-dessus.
- De t4 à T, étape finale de remise à la pression haute PH par prélèvement d'une partie de l'hydrogène produit via la ligne 10.

Grâce au recyclage d'une partie du gaz résiduaire décrite ci-dessus, on peut obtenir un rendement en hydrogène très élevé, de l'ordre de 95% contre environ 80% en l'absence d'un tel recyclage.

De plus, le recyclage en question ne nécessite pas d'investissement supplémentaire important, puisque, d'une part, la recompression du gaz résiduaire s'effectue au moyen du compresseur de feed 6, et, d'autre part, le dimensionnement des adsorbeurs et des autres constituants de l'installation n'est que peu modifié.

Dans le cas de la Figure 1, le courant de feed arrivant via la conduite 5 est supposé constant, et il en est de même du débit de gaz résiduaire recyclé, grâce à la présence de la capacité tampon 13 et de l'organe de réglage de débit 14.

Dans certains cas, il n'est pas nécessaire que le débit du feed soit constant, par exemple du fait que ce feed est disponible en grandes quantités, en particulier en provenance d'un gazomètre. Dans ce cas, on peut supprimer la capacité 13 et l'organe de réglage de débit 14, comme représenté à la Figure 3; le débit de gaz résiduaire recyclé fluctue librement au cours du cycle, et en réglant le compresseur 6 sur un débit constant, celui-ci aspire en outre un débit de feed qui, à chaque instant, est tel que la somme de ce débit et du débit du gaz résiduaire recyclé est constant dans le temps.

En variante également (Figure 4), si le feed est disponible sous la haute pression PH, le gaz résiduaire recyclé, issu de la capacité tampon 13, est comprimé à la même pression PH par un compresseur 6A. Dans cette variante, comme représenté, l'organe de réglage de débit 14 de la Figure 1 peut être supprimé.

Il est à noter que le débit de purge peut être constant dans le temps, ou bien variable, ou même intermittent, par exemple limité à des intervalles de temps où la concentration en impuretés du gaz résiduaire est maximale. On peut ainsi obtenir une optimisation de la purge tenant compte des variations de concentration en impuretés du gaz résiduaire.

L'invention peut également être mise en oeuvre pour l'épuration d'autres gaz contenant des impuretés préférentiellement absorbables, notamment pour l'épuration d'hélium ou de néon.

## Revendications

**1 -** Procédé d'épuration d'un gaz contenant des impuretés préférentiellement adsorbables, notamment d'hydrogène par adsorption à pression variable (PSA), du type mettant en oeuvre plusieurs adsorbeurs avec, pour chaque adsorbeur, un cycle comprenant les phases opératoires suivantes, lesquelles sont décalées d'un adsorbeur à l'autre d'un nième de la durée du cycle, ou n désigne le nombre d'adsorbeurs : production sensiblement isobare à une pression haute du cycle, cette phase de production comportant l'admission du gaz impur à traiter dans l'adsorbeur par une première extrémité, dite extrémité d'entrée, de l'adsorbeur, avec circulation de ce gaz dans l'adsorbeur et soutirage simultané l'autre extrémité de l'adsorbeur de gaz épuré, le sens de circulation dans l'adsorbeur au cours de cette phase de production étant appelé co-courant et le sens inverse de circulation, étant appelé contre-courant; régénération de l'adsorbeur comprenant une décompression de l'adsorbeur jusqu'à une pression basse du cycle, cette décompression comprenant au moins une étape dans laquelle un gaz résiduaire est soutiré à contre-courant de l'adsorbeur; et remontée en pression jusqu'à la pression haute du cycle, caractérisé en ce qu'une partie du gaz résiduaire est mélangée au gaz impur à traiter, le reste de ce gaz résiduaire constituant une purge.

**2 -** Procédé suivant la revendication 1, caractérisé en ce que la phase de production comprend une étape de compression du gaz impur à la pression haute du cycle, et en ce que ladite partie du gaz résiduaire est mélangée au gaz impur avant la compression de celui-ci.

**3 -** Procédé suivant la revendication 1, caractérisé en ce que ladite partie du gaz résiduaire est comprimée avant d'être mélangée au gaz impur sous la pression haute du cycle.

**4 -** Procédé suivant l'une quelconque des revendications 1 à 3, caractérisé en ce que la régénération de l'adsorbeur comprend les étapes suivantes:
(a) une première dépressurisation à co-courant par équilibrage de pressions avec un autre adsorbeur en début de phase de remontée en pression;
(b) une seconde dépressurisation à co-courant, le gaz issu de l'adsorbeur étant envoyé à une capacité auxiliaire (4);
(c) une dépressurisation à contre-courant jusqu'à une pression basse du cycle ; et
(d) une élution à contre-courant au moyen de gaz prélevé dans la capacité auxiliaire, ladite partie du gaz résiduaire provenant de l'une au moins des étapes (c) et (d).

**5 -** Procédé suivant la revendication 4, caractérisé en ce que la remontée en pression s'effectue à contre-courant, d'abord par équilibrage de pressions avec un autre adsorbeur en phase (a) puis par introduction à contre-courant de gaz épuré dans l'adsorbeur.

**6 -** Procédé suivant l'une quelconque des revendications 1 à 5, caractérisé en ce que la purge représente quelques % à quelques dizaines de % du gaz résiduaire.

**7 -** Procédé suivant l'une des revendications 1 à 6, caractérisé en ce que l'on fait varier le débit de purge au cours du cycle, notamment en fonction de la concentration en impuretés du gaz résiduaire.

**8 -** Installation d'épuration d'un gaz contenant des impuretés préférentiellement adsorbables, notamment d'hydrogène, par adsorption à pression variable (PSA), du type comprenant plusieurs adsorbeurs, un ensemble de conduites et de vannes adapté pour mettre en oeuvre, pour chaque adsorbeur, un cycle comprenant les phases opératoires suivantes, lesquelles sont décalées d'un adsorbeur à l'autre d'un nième de la durée du cycle, ou n désigne le nombre d'adsorbeurs : production sensiblement isobare à une pression haute du cycle, cette phase de production comportant l'admission du gaz impur à traiter dans l'adsorbeur par une première extrémité, dite extrémité d'entrée, de l'adsorbeur, avec circulation de ce gaz dans l'adsorbeur et soutirage simultané à l'autre extrémité de l'adsorbeur de gaz épuré, le sens de circulation dans l'adsorbeur au cours de cette phase de production étant appelé co-courant et le sens inverse de circulation étant appelé contre-courant; régénération de l'adsorbeur comprenant une décompression de l'adsorbeur jusqu'à une pression basse du cycle, cette décompression comprenant au moins une étape dans laquelle un gaz résiduaire est soutiré à contre-courant de l'adsorbeur; et remontée en pression jusqu'à la pression haute du cycle, caractérisée en ce qu'elle comprend une conduite de purge (7) reliée à l'extrémité d'entrée des adsorbeurs et sur laquelle est piquée une conduite de recyclage (8) reliée à la conduite (5) d'amenée de gaz impur à traiter.

**9 -** Installation suivant la revendication 8, caractérisée en ce qu'elle comprend un compresseur de gaz impur (6), et en ce que ladite conduite de recyclage (8) est reliée à l'aspiration de ce compresseur.

**10 -** Installation suivant la revendication 8, caractérisée en ce que ladite conduite de recyclage (8) est équipée d'un compresseur de gaz résiduaire (6A) entre la conduite de purge (7) et la conduite (5) d'amenée de gaz impur à traiter.
